# EUROPEAN PATENT APPLICATION

(11) **EP 4 807 932 A1**
(43) Date of publication of application: **16.09.2026**
(21) Application number: 24887251.7
(22) Date of filing: 12.03.2024
(51) Int. Cl.: H02J 3/00

(54) **CONTROL METHOD AND APPARATUS FOR RECEIVING-END ALTERNATING-CURRENT FAULT RIDE-THROUGH, AND ELECTRONIC DEVICE AND STORAGE MEDIUM**

(30) Priority: 08.11.2023 CN 202311478671
(71) Applicant: Electric Power Research Institute, China Southern Power Grid, Guangzhou, Guangdong 510663 (CN)
(72) Inventor: CAO, Wanyu, Guangzhou, Guangdong 510663 (CN); ZHOU, Yuebin, Guangzhou, Guangdong 510663 (CN); CAI, Xipeng, Guangzhou, Guangdong 510663 (CN); YUAN, Zhiyong, Guangzhou, Guangdong 510663 (CN); RAO, Hong, Guangzhou, Guangdong 510663 (CN); LI, Yan, Guangzhou, Guangdong 510663 (CN); XU, Shukai, Guangzhou, Guangdong 510663 (CN); YANG, Liu, Guangzhou, Guangdong 510663 (CN); XU, Yiliang, Guangzhou, Guangdong 510663 (CN)
(74) Representative: Schmid, Nils T.F.
(86) International application number: PCT/CN2024/081095
(87) International publication number: WO 2025/097625

(57) **Abstract**

A control method and apparatus for receiving-end alternating-current fault ride-through, and an electronic device and a storage medium, which relate to the technical field of power transmission and distribution, and are used for solving the technical problems of system power imbalance, poor coordination capability, etc., in existing receiving-end alternating-current fault ride-through processes. The method comprises: determining as a faulty receiving-end converter station a receiving-end converter station in which an alternating-current fault occurs, generating an alternating-current voltage fault signal by means of the faulty receiving-end converter station, and also executing power surplus assessment, in order to obtain a surplus power value; then, transmitting the alternating-current voltage fault signal and the surplus power value to an alternating-current energy consumption apparatus; if the faulty receiving-end converter station is a receiving-end constant-voltage station, on the basis of the alternating-current voltage fault signal and the surplus power value, absorbing surplus power of an islanded power grid by means of putting the alternating-current energy consumption apparatus into use; and if the faulty receiving-end converter station is a receiving-end constant-power station, adjusting, on the basis of the surplus power value, a reference power value of the faulty receiving-end converter station by means of the faulty receiving-end converter station, and absorbing the surplus power of the islanded power grid by means of putting the alternating-current energy consumption apparatus into use.

## Description

This application claims the priority to Chinese Patent Application No. 202311478671.4, titled "CONTROL METHOD AND APPARATUS FOR RECEIVING-END ALTERNATING-CURRENT FAULT RIDE-THROUGH, AND ELECTRONIC DEVICE AND STORAGE MEDIUM", filed on November 08, 2023 with the China National Intellectual Property Administration, which is incorporated herein by reference in its entirety.

### FIELD

The present disclosure relates to the technical field of power transmission and distribution, and in particular to methods and apparatuses for controlling alternating-current fault ride-through of a receiving-end, an electronic device and a storage medium.

### BACKGROUND

With the vigorous development of renewable energy technologies, an increasing number of renewable energy-related industries are put into practical use, especially in the power industry. Most renewable energy bases, which serve as power generation sources, are built in remote areas with low load levels and weak grid structures, resulting in a significant requirement for stable transmission of islanded renewable energy. Flexible direct-current transmission has characteristics such as flexibility, controllability and high efficiency, and is one of the key power transmission methods for renewable energy transmission.

In practical applications, when a flexible direct-current transmission technology is applied to connect an islanded power generation system and a receiving-end alternating-current grid, if a fault occurs in the receiving-end alternating-current grid, electrical energy cannot be transmitted. If a sending-end power generation system is not disconnected, a direct-current system may accumulate a large amount of surplus power, which leads to severe overvoltage in the direct-current system, and threatens safe operation of the direct-current system.

To address a problem of surplus power in a flexible direct-current system during a fault condition, and enable a direct-current transmission system to recover quickly after a temporary fault occurs in a receiving-end grid, a common solution currently adopted in domestic and international engineering projects is to install a direct-current energy-consuming apparatus on a direct-current side of a receiving-end converter station, to consume excess power, and to enable fault ride-through without disconnecting a sending-end islanded power generation system. In this method, the direct-current energy-consuming apparatus has a complex structure, and a large number of controllable power devices are adopted, resulting in high costs. Particularly, for widely-used modular direct-current energy-consuming apparatuses with good electromagnetic compatibility performance and real-time controllable power dissipation, a large number of capacitors, IGBTs (Insulated Gate Bipolar Transistor), diodes and other devices are adopted. Since capacitors are included in various modules, voltage balance across the capacitors is to be maintained. Thus, even no fault occurs in an alternating-current grid, certain switching operations of sub-modules are still required to ensure the voltage balance across the capacitors, resulting in additional losses, and readily leading to issues such as power imbalance and poor coordination during an alternating-current fault ride-through procedure.

### SUMMARY

According to the present disclosure, methods and apparatuses for controlling alternating-current fault ride-through of a receiving-end, an electronic device and a storage medium are provided, to completely or partially solve technical problems, such as system power imbalance and poor coordination, in a multi-terminal transmission system for islanded renewable energy over an ultra-long distance during a receiving-end alternating-current fault ride-through procedure.

According to the present disclosure, a method for controlling alternating-current fault ride-through of a receiving-end is provided. The method is applied to a receiving-end converter station of a multi-terminal transmission system for a renewable energy islanded grid. The multi-terminal transmission system further includes an alternating-current energy-consuming apparatus and at least one sending-end converter station connected to the alternating-current energy-consuming apparatus, and each sending-end converter station of the at least one sending-end converter station is connected to at least two receiving-end converter stations. The method includes:
generating, in response to detecting that an alternating-current fault occurs, an alternating-current voltage fault signal, and performing power surplus evaluation, to obtain a surplus power value;
transmitting the alternating-current voltage fault signal and the surplus power value to the alternating-current energy-consuming apparatus, where the alternating-current energy-consuming apparatus is inputted based on the alternating-current voltage fault signal and the surplus power value for absorbing islanded-voltage surplus power; and
adjusting, in response to a constant power control way being adopted, a power reference value based on the surplus power value.

According to the present disclosure, a method for controlling alternating-current fault ride-through of a receiving-end is provided. The method is applied to an alternating-current energy-consuming apparatus of a multi-terminal transmission system for a renewable energy islanded grid. The multi-terminal transmission system further includes at least one sending-end converter station connected to the alternating-current energy-consuming apparatus, and each sending-end converter station of the at least one sending-end converter station is connected to at least two receiving-end converter stations. The method includes:
receiving an alternating-current voltage fault signal and a surplus power value that are transmitted from a receiving-end converter station where an alternating-current fault occurs; and
controlling, based on the alternating-current voltage fault signal and the surplus power value, input for absorbing islanded-grid surplus power.

According to the present disclosure, a method for controlling alternating-current fault ride-through of a receiving-end is provided. The method is applied to a multi-terminal transmission system for a renewable energy islanded grid. The multi-terminal transmission system at least includes an alternating-current energy-consuming apparatus and at least one sending-end converter station connected to the alternating-current energy-consuming apparatus, and each sending-end converter station of the at least one sending-end converter station is connected to at least two receiving-end converter stations. The method includes:
determining a receiving-end converter station where an alternating-current fault is detected as a fault receiving-end converter station, generating an alternating-current voltage fault signal through the fault receiving-end converter station, and performing power surplus evaluation, to obtain a surplus power value;
transmitting, through the fault receiving-end converter station, the alternating-current voltage fault signal and the surplus power value to the alternating-current energy-consuming apparatus;
absorbing, in response to the fault receiving-end converter station being a receiving-end constant-voltage station, islanded-grid surplus power by inputting the alternating-current energy-consuming apparatus based on the alternating-current voltage fault signal and the surplus power value; and
adjusting, in response to the fault receiving-end converter station being a receiving-end constant-power station, a power reference value of the fault receiving-end converter station based on the surplus power value through the fault receiving-end converter station, and absorbing the islanded-grid surplus power by inputting the alternating-current energy-consuming apparatus.

According to the present disclosure, an apparatus for controlling alternating-current fault ride-through of a receiving-end is further provided. The apparatus is for use in a receiving-end converter station of a multi-terminal transmission system for a renewable energy islanded grid. The multi-terminal transmission system further includes an alternating-current energy-consuming apparatus and at least one sending-end converter station connected to the alternating-current energy-consuming apparatus, and each sending-end converter station of the at least one sending-end converter station is connected to at least two receiving-end converter stations. The apparatus includes:
a first power surplus evaluating module, configured to generate, in response to detecting that an alternating-current fault occurs, an alternating-current voltage fault signal, and perform power surplus evaluation, to obtain a surplus power value;
a first surplus power value transmitting module, configured to transmit the alternating-current voltage fault signal and the surplus power value to the alternating-current energy-consuming apparatus, where the alternating-current energy-consuming apparatus is inputted based on the alternating-current voltage fault signal and the surplus power value for absorbing islanded-voltage surplus power; and
a power reference value adjusting module, configured to adjust, in response to a constant power control way being adopted, a power reference value based on the surplus power value.

According to the present disclosure, an apparatus for controlling alternating-current fault ride-through of a receiving-end is further provided. The apparatus is for use in an alternating-current energy-consuming apparatus of a multi-terminal transmission system for a renewable energy islanded grid. The multi-terminal transmission system further includes at least one sending-end converter station connected to the alternating-current energy-consuming apparatus, and each sending-end converter station of the at least one sending-end converter station is connected to at least two receiving-end converter stations. The apparatus includes:
a surplus power value receiving module, configured to receive an alternating-current voltage fault signal and a surplus power value that are transmitted from a receiving-end converter station where an alternating-current fault occurs; and
a surplus power inputting module, configured to control, based on the alternating-current voltage fault signal and the surplus power value, input for absorbing islanded-grid surplus power.

According to the present disclosure, an apparatus for controlling alternating-current fault ride-through of a receiving-end is further provided. The apparatus is for use in a multi-terminal transmission system for a renewable energy islanded grid. The multi-terminal transmission system at least includes an alternating-current energy-consuming apparatus and at least one sending-end converter station connected to the alternating-current energy-consuming apparatus, and each sending-end converter station of the at least one sending-end converter station is connected to at least two receiving-end converter stations. The apparatus includes:
a second power surplus evaluating module, configured to determine a receiving-end converter station where an alternating-current fault is detected as a fault receiving-end converter station, generate an alternating-current voltage fault signal through the fault receiving-end converter station, and perform power surplus evaluation, to obtain a surplus power value;
a second surplus power value transmitting module, configured to transmit, through the fault receiving-end converter station, the alternating-current voltage fault signal and the surplus power value to the alternating-current energy-consuming apparatus;
a receiving-end constant-voltage station controlling and processing module, configured to absorb, in response to the fault receiving-end converter station being a receiving-end constant-voltage station, islanded-grid surplus power by inputting the alternating-current energy-consuming apparatus based on the alternating-current voltage fault signal and the surplus power value; and
a receiving-end constant-power station controlling and processing module, configured to adjust, in response to the fault receiving-end converter station being a receiving-end constant-power station, a power reference value of the fault receiving-end converter station based on the surplus power value through the fault receiving-end converter station, and absorb the islanded-grid surplus power by inputting the alternating-current energy-consuming apparatus.

According to the present disclosure, an electronic device is further provided. The electronic device includes a processor and a memory,
where the memory is configured to store a program code, and transmit the program code to the processor; and
the processor is configured to perform the method for controlling alternating-current fault ride-through of a receiving-end according to any one of the above embodiments according to an instruction in the program code.

According to the present disclosure, a computer-readable storage medium is further provided. The computer-readable storage medium is configured to store a program code, and the program is used for performing the method for controlling alternating-current fault ride-through of a receiving-end according to any one of the above embodiments.

It can be seen from the above technical solutions that the present disclosure has the following advantages. A receiving-end alternating-current fault ride-through procedure of a multi-terminal transmission system for large-scale islanded renewable energy over an ultra-long distance is referred to. Firstly, a receiving-end converter station where an alternating-current fault is detected is determined as a fault receiving-end converter station, and an alternating-current voltage fault signal is generated, and power surplus evaluation is performed to obtain a surplus power value, thereby quickly determining to-be-absorbed surplus power, and preventing voltage rise due to power accumulation in a renewable energy power field. The alternating-current voltage fault signal and the surplus power value are then transmitted to the alternating-current energy-consuming apparatus, where the alternating-current energy-consuming apparatus dissipates and absorbs surplus power based on the alternating-current voltage fault signal and the surplus power value. In response to the fault receiving-end converter station being a receiving-end constant-voltage station, islanded-grid surplus power is absorbed by inputting the alternating-current energy-consuming apparatus based on the alternating-current voltage fault signal and the surplus power value. In response to the fault receiving-end converter station being a receiving-end constant-power station, a power reference value of the fault receiving-end converter station is adjusted based on the surplus power value, and the islanded-grid surplus power is absorbed by inputting the alternating-current energy-consuming apparatus. Therefore, when an alternating-current fault occurs, different measures can be taken for receiving-end converter stations controlled by different ways, problems, such as system power imbalance, poor coordination and poor recovery characteristics after fault clearance that are prone to arise during the receiving-end alternating-current fault ride-through procedure of the multi-terminal transmission system for large-scale islanded renewable energy over the ultra-long distance.

### BRIEF DESCRIPTION OF THE DRAWINGS

To clearly illustrate the technical solution in the embodiments of the present disclosure or in the related art, the drawings to be used in the description of the embodiments or the related art are briefly introduced hereinafter. The drawings in the following description show only some embodiments of the present disclosure, and other drawings may be obtained by those skilled in the art from the drawings without any creative effort.
FIG. 1a is a schematic structural diagram of a multi-terminal transmission system for a renewable energy islanded grid according to an embodiment of the present disclosure;
FIG. 1b is a schematic control diagram of a receiving-end flexible power-controlled power converter station according to an embodiment of the present disclosure;
FIG. 2 is a flowchart of steps in a method for controlling alternating-current fault ride-through of a receiving-end according to an embodiment of the present disclosure;
FIG. 3 is an overall flowchart of a method for controlling alternating-current fault ride-through of a receiving-end according to an embodiment of the present disclosure; and
FIG. 4 is a structural block diagram of an apparatus for controlling alternating-current fault ride-through of a receiving-end according to an embodiment of the present disclosure.

### DETAILED DESCRIPTION

According to embodiments of the present disclosure, methods and apparatuses for controlling alternating-current fault ride-through of a receiving-end, an electronic device and a storage medium are provided, to completely or partially solve technical problems, such as system power imbalance and poor coordination, in a multi-terminal transmission system for islanded renewable energy over an ultra-long distance during a receiving-end alternating-current fault ride-through procedure.

Technical solutions in embodiments of the present disclosure are described clearly and completely in conjunction with the drawings in embodiments of the present disclosure, to improve clarity and intelligibility of objectives, features, and advantages of the present disclosure. The described embodiments are only some rather than all of the embodiments of the present disclosure. Any other embodiments obtained by those skilled in the art based on the embodiments of the present disclosure without any creative effort shall fall within the protection scope of the present disclosure.

As an example, in a renewable energy islanded grid system, to address a problem of surplus power in a flexible direct-current system during a fault condition, and enable a direct-current transmission system to recover quickly after a temporary fault occurs in a receiving-end grid, a common solution is to install a direct-current energy-consuming apparatus on a direct-current side of a receiving-end converter station, to consume excess power, and to enable fault ride-through without disconnecting a sending-end islanded power generation system. In this method, the direct-current energy-consuming apparatus has a complex structure, and a large number of controllable power devices are adopted, resulting in high costs. Particularly, for widely-used modular direct-current energy-consuming apparatuses with good electromagnetic compatibility performance and real-time controllable power dissipation, a large number of capacitors, IGBTs, diodes and other devices are adopted. Since capacitors are included in various modules, voltage balance across the capacitors is to be maintained. Thus, even no fault occurs in an alternating-current grid, certain switching operations of sub-modules are still required to ensure the voltage balance across the capacitors, resulting in additional losses, and readily leading to issues such as power imbalance and poor coordination during an alternating-current fault ride-through procedure.

Compared with a direct-current energy-consuming apparatus, installing an alternating-current energy-consuming apparatus including thyristors and energy-consuming resistors in an alternating-current line of a sending-end converter station enables a simpler topology and lower costs without complex switching control, which can further improve engineering economic performance during operation of the flexible direct-current system, and is applicable to islanded transmission systems for onshore renewable energy bases.

Currently, alternating-current energy-consuming apparatuses are rarely used in islanded transmission systems of large-scale renewable energy bases. Especially, coordinated control strategies for multi-terminal direct-current transmission systems are not well-established.

Therefore, one of core inventive points of embodiments of the present disclosure is to provide a method for controlling alternating-current fault ride-through of a receiving-end, which is applicable to a multi-terminal transmission system for large-scale islanded renewable energy over an ultra-long distance. Firstly, referring to problems of complex control and high cost of a direct-current energy-consuming apparatus, the direct-current energy-consuming apparatus is replaced by an alternating-current energy-consuming apparatus for riding through a receiving-end alternating-current fault, to reduce project cost of the multi-terminal transmission system, and to improve economic performance during operation. Secondly, referring to a problem of insufficient coordination between the alternating-current energy-consuming apparatus and a multi-terminal direct-current transmission system, receiving-end alternating-current fault ride-through is achieved by enabling coordinated operation between the alternating-current energy-consuming apparatus and the multi-terminal direct-current transmission system. Referring to differences between alternating-current faults of a voltage-controlled receiving-end converter station and a power-controlled receiving-end converter station, different fault ride-through strategies are provided, and a receiving-end power restoration speed is adjusted in conjunction with a sending-end alternating-current energy-consuming disconnection speed, to solve problems, such as system power imbalance, poor coordination and poor recovery characteristics after fault clearance that are prone to arise during the receiving-end alternating-current fault ride-through procedure of the multi-terminal transmission system, and to avoid overvoltage blocking of converter stations and overvoltage-induced damage accidents of devices. In addition, referring to a problem of discontinuous energy-consuming capacity due to grouping configuration of alternating-current energy-consuming resistors, a flexibly-switching strategy is provided. Power surplus is determined based on alternating-current voltage drop during a fault condition, an inputted number in the energy-consuming apparatuses is calculated, and flexibly-switching is performed repeatedly between energy-consuming sub-modules based on actual power consumption, to address a problem of mismatch between energy-consuming power and system surplus power caused by a discontinuous alternating-current energy-consuming capacity.

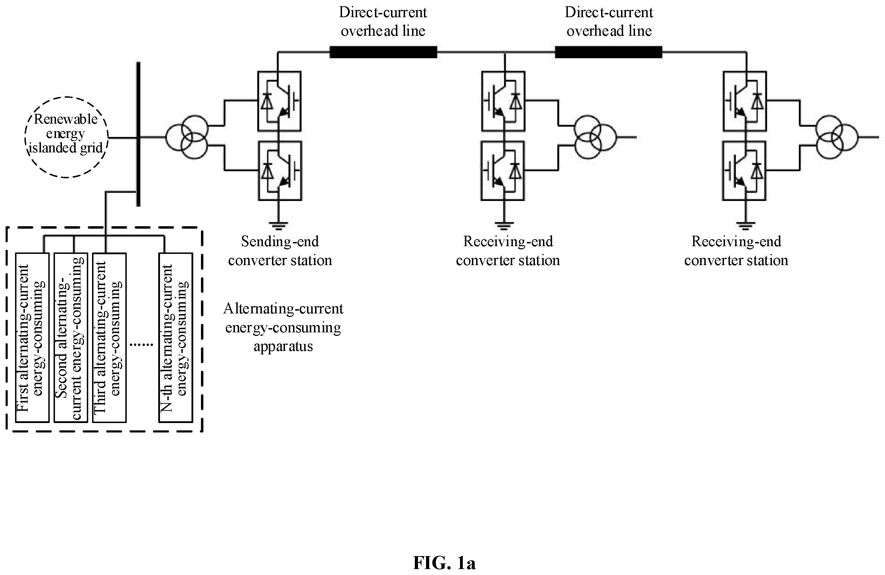

Reference is made to FIG. 1a, which is a schematic structural diagram of a multi-terminal transmission system for a renewable energy islanded grid according to an embodiment of the present disclosure. The multi-terminal transmission system is suitable for transmission control of large-scale islanded renewable energy over an ultra-long distance. The multi-terminal transmission system may at least include a renewable energy power field, an alternating-current energy-consuming apparatus, and at least one sending-end flexible direct-current converter station (hereinafter referred to as a sending-end converter station) connected to the alternating-current energy-consuming apparatus. Each sending-end converter station of the at least one sending-end converter station is connected to at least two receiving-end flexible direct-current converter station (hereinafter referred to as a receiving-end converter station).

To simplify illustration, only one combination of converter station structures (one sending-end converter station corresponds to at least two receiving-end converter stations) is shown as an example in FIG. 1a. In practice, the multi-terminal transmitting system may include multiple identical or similar converter station structure combinations, which is not limited in the present disclosure.

Multiple alternating-current energy-consuming sub-modules are provided in the alternating-current energy-consuming apparatus. The alternating-current energy-consuming apparatus is configured to dissipate continuous active output from the renewable energy power field when an active power transmission channel of a direct-current line is obstructed, thereby preventing a problem of overvoltage in an alternating-current feeder line at a sending end caused by energy accumulation.

The alternating-current energy-consuming apparatus is connected to a location where the sending-end converter station and the renewable energy islanded grid are connected to an alternating-current bus. The renewable energy islanded grid is connected to the sending-end converter station through a three-phase alternating-current bus. The sending-end converter station is connected to the receiving-end converter station through a bipolar direct-current overhead line.

Further, control strategies may be configured for the sending-end converter station and the receiving-end converter station respectively. In an embodiment, all sending-end converter stations adopt a dual closed-loop control way for constant alternating-current voltage-frequency, for at least two receiving-end converter stations corresponding to each sending-end converter station, one receiving-end converter station of the at least two receiving-end converter stations adopts a constant direct-current voltage control way, and the other receiving-end converter station of the at least two receiving-end converter stations adopts a constant power control way. In addition, an inter-station optical-fiber communication way is adopted for signal transmission among the sending-end converter station, the receiving-end converter stations and the alternating-current energy-consuming apparatus.

In addition, an alternating-current fault power control way is configured for a power-controlled receiving-end converter station, power parameters during a fault condition and a power restoration curve during fault recovery are set, and a smooth switching slope is set.

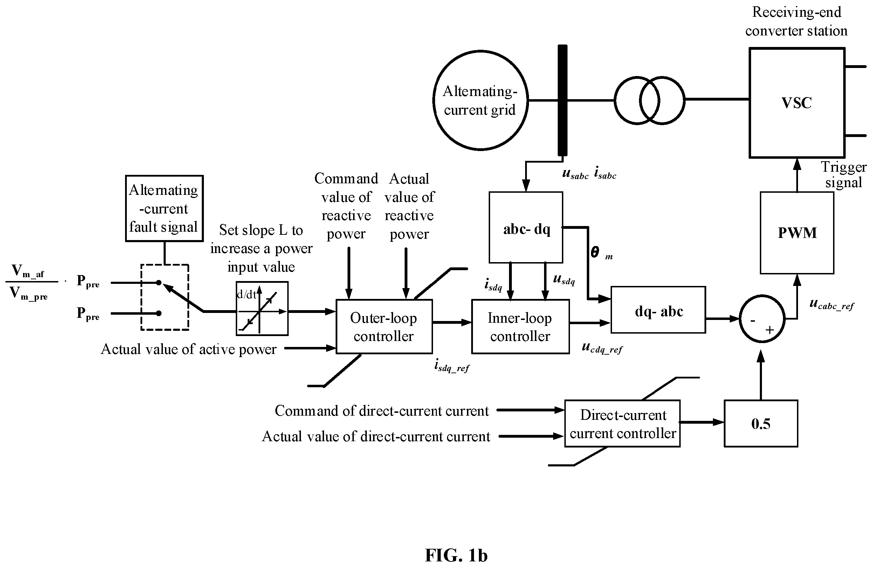

For better description, reference is made to FIG. 1b, which is a schematic control diagram of a receiving-end flexible power-controlled power converter station according to an embodiment of the present disclosure.

Taking power control required when an alternating-current fault occurs as an example, when the receiving-end converter station is in normal operation, active power of the receiving-end converter station is Pₚᵣₑ. After an alternating-current fault occurs, as the voltage decreases, the active power of the receiving-end converter station may decrease to $\frac{{V}_{m_af}}{{V}_{m_pre}} ⋅ {P}_{pre}$, where V_{m_af} represents an effective value of voltage at an alternating-current side after the fault occurs, and V_{m_pre} represents an effective value of the voltage at the alternating-current side before the fault occurs. In response to detecting that the active power of the receiving-end converter station is decreased to $\frac{{V}_{m_af}}{{V}_{m_pre}} ⋅ {P}_{pre}$ (which may be referred to as fault power), an alternating-current fault signal may be generated. The fault power is processed with a smooth switching slope (d/dt), and a command value of the active power is outputted in conjunction with the alternating-current fault signal. The command value of the active power, along with inputs including an actual value of the active power, a command value of reactive power and an actual value of the reactive power, are inputted to a (voltage) outer-loop controller for processing.

The outer-loop controller may also be referred to as a voltage outer-loop controller. The voltage outer-loop controller may regulate voltage output based on the magnitude of the voltage, to maintain the stability of the voltage. Therefore, adopting the outer-loop controller for voltage control may maintain stable output of the voltage.

After processed by the outer-loop controller, fault current reference value i_{sdq_ref} in a DQ three-dimensional coordinate system may be outputted, and then fault current reference value i_{sdq_ref} is inputted to a (current) inner-loop controller. The current inner-loop controller may regulate current output based on the magnitude of the current, to maintain the stability of the current.

In addition, three-phase voltage u_{sabc} and three-phase current i_{sabc} in an ABC three-dimensional coordinate system outputted from an alternating-current bus are inputted to three-dimensional coordinate transformation processing abc-dq. After three-dimensional coordinate transformation, three-phase voltage u_{sdq} and three-phase current i_{sdq} in the DQ coordinate system are outputted to the inner-loop controller. In conjunction with three-phase voltage u_{sdq}, three-phase current i_{sdq}, and fault current reference value i_{sdq_ref}, control voltage reference value u_{cdq_ref} corresponding to the fault current reference value i_{sdq_ref} may be outputted.

Fault voltage reference value u_{sdq_ref} and coordinate transformation torque value θₘ outputted from three-dimensional coordinate transformation processing abe-dq are inputted to three-dimensional coordinate transformation processing dq-abc for reverse coordinate transformation. In conjunction with a direct-current current value outputted from a direct-current current controller after limitation, three-phase control voltage reference value u_{cabc_ref} in the ABC three-dimensional coordinate system is outputted. Three-phase control voltage reference value u_{cabc_ref} is then inputted to PWM (Pulse-width Modulation) for pulse modulation, to output a trigger signal corresponding to three-phase control voltage reference value u_{cabc_ref}. The trigger signal may trigger VSC (Voltage Source Converter) for power control, to reduce a power reference value of a receiving-end constant-power converter station.

An actual operating principle of a power control procedure after the fault recovers is the same as or similar to the above-described procedure. Reference may be made to the related procedure in the above embodiment, and is not repeated herein.

Therefore, for the receiving-end constant-power converter station, with configuration for alternating-current fault power control, during fault occurrence or after the fault recovers, power can be smoothly switched based on power parameters or a power switching curve when reducing or increasing the power. Stable operation of each functional module in the receiving-end constant-power converter station can be ensured to the greatest extent.

In an embodiment of the present disclosure, a multi-terminal transmission system that is suitable for transmission control of large-scale islanded renewable energy over an ultra-long distance is provided. In this system, the direct-current energy-consuming apparatus is replaced by an alternating-current energy-consuming apparatus for riding through a receiving-end alternating-current fault, which greatly reduces the project cost of the multi-terminal transmission system, and improves operational economic performance. In addition, with the method for controlling alternating-current fault ride-through of a receiving-end according to the embodiment of the present disclosure, problems, such as system power imbalance, poor coordination and poor recovery characteristics after fault clearance that are prone to arise during the receiving-end alternating-current fault ride-through procedure of the multi-terminal transmission system can be solved, and overvoltage blocking of converter stations and overvoltage-induced damage accidents of devices can be avoided.

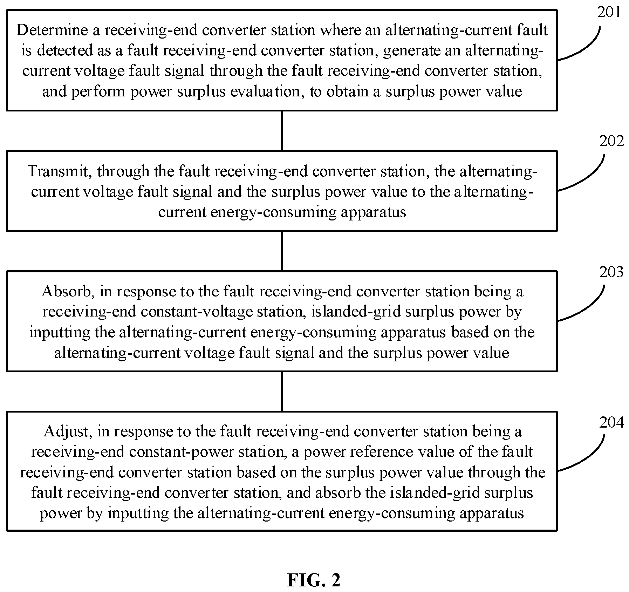

Reference is made to FIG. 2, which is a flowchart of steps in a method for controlling alternating-current fault ride-through of a receiving-end according to an embodiment of the present disclosure. The method is applied to a multi-terminal transmission system for a renewable energy islanded grid. The multi-terminal transmission system at least includes an alternating-current energy-consuming apparatus and at least one sending-end converter station connected to the alternating-current energy-consuming apparatus, and each sending-end converter station of the at least one sending-end converter station is connected to at least two receiving-end converter stations. The method may specifically include the following steps.

In step S201, a receiving-end converter station where an alternating-current fault is detected is determined as a fault receiving-end converter station, an alternating-current voltage fault signal is generated through the fault receiving-end converter station, and power surplus evaluation is performed to obtain a surplus power value.

In practical application, alternating-current voltage of the receiving-end converter station may be detected in real time, and whether the alternating-current fault occurs may be determined based on an effective value of the alternating-current voltage. When the alternating-current fault occurs, alternating-current voltage fault signal U_{low} may be generated through the receiving-end converter station where the fault occurs, and power surplus evaluation is performed based on changes in power.

Further, when performing power surplus evaluation to obtain a surplus power value, the surplus power value corresponding to the fault receiving-end converter station may be calculated based on: $f = \left(1-\frac{{V}_{m_af}}{{V}_{m_pre}}\right) ⋅ {P}_{pre} ,$ where f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

By real-time monitoring of the alternating-current voltage, whether the alternating-current fault occurs in the receiving-end converter station can be detected in time, and a fault signal indicating the alternating-current voltage fault can be generated before the fault occurs, to trigger power dissipation of the alternating-current energy-consuming apparatus. In addition, through the power surplus evaluation, to-be-absorbed surplus power can be quickly determined, preventing voltage rise due to power accumulation in a renewable energy power field.

In step 202, the alternating-current voltage fault signal and the surplus power value are transmitted to the alternating-current energy-consuming apparatus through the fault receiving-end converter station.

The fault receiving-end converter station may transmit alternating-current voltage fault signal U_{low} and surplus power value f to a sending-end alternating-current energy-consuming apparatus, for the alternating-current energy-consuming apparatus to dissipate and absorb the surplus power based on the alternating-current voltage fault signal U_{low} and surplus power value f.

In step 203, in response to the fault receiving-end converter station being a receiving-end constant-voltage station, islanded-grid surplus power is absorbed by inputting the alternating-current energy-consuming apparatus based on the alternating-current voltage fault signal and the surplus power value.

It can be seen from the above description that in the embodiment of the present disclosure, control strategies are provided for the receiving-end converter stations. Specifically, one receiving-end converter station adopts a direct-current constant-voltage control way, and the other receiving-end converter station adopts a constant-power control way. When the alternating-current fault occurs, receiving-end converter stations adopting different control ways take different measures.

Further, for an alternating-current fault condition of the receiving-end constant-voltage station, the power surplus may be evaluated based on drop in the effective value of the alternating-current voltage, and the calculated surplus power value may be inputted to the sending-end alternating-current energy-consuming apparatus, such that the alternating-current energy-consuming apparatus absorbs the islanded-grid surplus power based on the surplus power value.

For an alternating-current fault condition of the receiving-end constant-power station, on the basis of inputting the surplus power value to the sending-end alternating-current energy-consuming apparatus, a power reference value of the receiving-end converter station is reduced based on the drop in the effective value of the alternating-current voltage.

Based on the above description, the alternating-current energy-consuming apparatus includes multiple alternating-current energy-consuming sub-modules, and each alternating-current energy-consuming sub-module of the multiple alternating-current energy-consuming sub-modules respectively corresponds to an alternating-current energy-consuming capacity. Further, the absorbing islanded-grid surplus power by inputting the alternating-current energy-consuming apparatus based on the alternating-current voltage fault signal and the surplus power value, may specifically include the following steps.

A number of inputted alternating-current energy-consuming sub-modules is calculated by using the alternating-current energy-consuming capacity and the surplus power value based on alternating-current voltage fault signal Uₛ, and the calculated number of alternating-current energy-consuming sub-modules are inputted by rounding up the calculated number of inputted sub-modules to absorb the islanded-grid surplus power. In an embodiment, $\begin{matrix}{N}_{inputted sub - modules in the alternating - current energy - consuming apparatus} = \\ \prod \frac{f}{{P}_{capacity of each alternating - current energy - consuming apparatus}} ,\end{matrix}$ where N_{inputted sub-modules in the alternating-current energy-consuming apparatus} represents a number of inputted alternating-current energy-consuming sub-modules required in the alternating-current energy-consuming apparatus, Π represents rounding up, and P_{capacity of each alternating-current energy-consuming apparatus} represents an alternating-current energy-consuming capacity respectively corresponding to each alternating-current energy-consuming sub-module.

When power dissipation and absorption are performed by the alternating-current energy-consuming apparatus, the alternating-current energy-consuming apparatus itself may also generate energy-consuming power. When actual total energy-consuming power of the alternating-current energy-consuming apparatus is greater than to-be-absorbed surplus power, an alternating-current energy-consuming sub-module with a flexibly-switching function may be provided, to avoid unnecessary power loss of the system. The alternating-current energy-consuming sub-modules may control the actual total energy-consuming power of the alternating-current energy-consuming apparatus and actual fault surplus power to be maintained within a difference range of ±10% through a flexibly-switching way.

In an embodiment, during absorption of the surplus power, the actual total energy-consuming power of the alternating-current energy-consuming apparatus may be acquired. When the actual total energy-consuming power is greater than the surplus power, an alternating-current energy-consuming sub-module is selected from the multiple alternating-current energy-consuming sub-modules as a flexibly-switching energy-consuming sub-module. The flexibly-switching energy-consuming sub-module is configured for controlling the actual total energy-consuming power and actual fault surplus power to be maintained within a difference range of ±10%.

Further, the flexibly-switching way for controlling the actual total energy-consuming power and actual fault surplus power to be maintained within a difference range of ±10% may specifically include the following steps.

During the absorption of the surplus power, in response to the actual total energy-consuming power being greater than the surplus power, and the actual total energy-consuming power reaching 110% of the surplus power, the flexibly-switching energy-consuming sub-module is controlled to be disconnected through the alternating-current energy-consuming apparatus, that is, the flexibly-switching energy-consuming sub-module is not inputted for power absorption.

In response to the actual total energy-consuming power being less than the surplus power, and the actual total energy-consuming power being decreased to 90% of the surplus power, the flexibly-switching energy-consuming sub-module is controlled to be inputted again through the alternating-current energy-consuming apparatus.

Thus, by providing the flexibly-switching way for the alternating-current energy-consuming apparatus, the absorption of the surplus power can be adjusted in real time, such that the actual total energy-consuming power of the alternating-current energy-consuming apparatus and the actual fault surplus power can be maintained within an allowable difference range, and unnecessary power loss of the system can be avoided.

In step S204, in response to the fault receiving-end converter station being a receiving-end constant-power station, a power reference value of the fault receiving-end converter station is adjusted based on the surplus power value through the fault receiving-end converter station, and the islanded-grid surplus power is absorbed by inputting the alternating-current energy-consuming apparatus.

In response to the fault receiving-end converter station being a receiving-end constant-power station, the fault receiving-end converter station may adjust the power reference value of the fault receiving-end converter station based on the surplus power value. In an embodiment, based on a power surplus evaluation result, the power reference value is controlled to be equal to active power before fault minus surplus power value f. In addition, the islanded-grid surplus power may be absorbed by the alternating-current energy-consuming apparatus, referring to the related procedure in step 203.

Further, when the fault receiving-end converter station detects that the alternating-current voltage is restored to a preset value, a fault recovery signal may be generated and transmitted to the alternating-current energy-consuming apparatus. After receiving the fault recovery signal, the alternating-current energy-consuming apparatus may systematically disconnect inputted energy-consuming sub-modules at a disconnection rate. In addition, in response to the fault receiving-end converter station being a receiving-end constant-power station, the power reference value of the fault receiving-end converter station is to be increased to power before the fault occurs at an increasing slope.

In an embodiment, in response to detecting that alternating-current voltage of the fault receiving-end converter station is restored to a preset alternating-current voltage threshold, a fault recovery signal is generated through the fault receiving-end converter station, and the fault recovery signal is sent to the alternating-current energy-consuming apparatus. Based on the fault recovery signal, inputted alternating-current energy-consuming sub-modules are controlled to be systematically disconnected at a disconnection rate through the alternating-current energy-consuming apparatus. In response to the fault receiving-end converter station being a receiving-end constant-power station, the power reference value of the fault receiving-end converter station is to be increased to power before the fault occurs at an increasing rate.

In practical application, to improve dynamic performance of fault recovery and reduce degree of system power imbalance, the disconnection rate of the alternating-current energy-consuming apparatus should be basically the same as a power increasing rate of the receiving-end constant-power station.

During the disconnection, a disconnection time interval of the alternating-current energy-consuming apparatus may be calculated based on: $T = \frac{f}{L ⋅ {N}_{inputted sub - modules in the alternating - current energy - consuming apparatus}} ,$ where T represents a time interval during which an alternating-current energy-consuming sub-module is disconnected by the alternating-current energy-consuming apparatus, and L represents an increasing rate for a power increase operation performed by the receiving-end converter station after the fault recovers; and
the alternating-current energy-consuming apparatus may control the disconnection rate to be the same as the increasing rate based on the disconnection time interval, or control an error between the disconnection rate and the increasing rate to be within a preset error rate range, where the preset error rate range may be independently set according to actual requirements, as long as the disconnection rate and the increasing rate remain substantially consistent during the disconnection procedure of the energy-consuming apparatus.

Further, to ensure that the time when the receiving-end constant-power station begins to increase power is consistent with the time when the alternating-current energy-consuming apparatus starts switching, after the alternating-current fault at the receiving end is recovered, the fault receiving-end converter station needs to consider alternating-current energy-consuming communication delay t, to start to increase power/disconnect energy-consuming sub-modules synchronously with the alternating-current energy-consuming apparatus that receives the fault restoration signal after delay t.

Communication delay t is determined based on an optical-fiber communication distance between the sending end and the receiving end, and a value of communication delay t is a constant for a determined project.

In an embodiment, in response to the fault receiving-end converter station being a receiving-end constant-power station, the fault receiving-end converter station is controlled to perform a power increase operation after a preset communication delay, to synchronize with an energy-consuming disconnection operation of the alternating-current energy-consuming apparatus.

Therefore, after the alternating-current fault is recovered, by coordinating and controlling the systematically disconnection rate of the alternating-current energy-consuming apparatus and a power restoration speed of the receiving-end constant-power station, the receiving-end converter station is smoothly switched from the fault to stable operation, enabling control for alternating-current fault ride-through of a receiving-end.

In an embodiment of the present disclosure, a method for controlling alternating-current fault ride-through of a receiving-end is provided, which is applied to a multi-terminal transmission system for large-scale islanded renewable energy over an ultra-long distance. referring to a problem of insufficient coordination between the alternating-current energy-consuming apparatus and a multi-terminal direct-current transmission system, receiving-end alternating-current fault ride-through is achieved by enabling coordinated operation between the alternating-current energy-consuming apparatus and the multi-terminal direct-current transmission system. Referring to differences between alternating-current faults of a voltage-controlled receiving-end converter station and a power-controlled receiving-end converter station, different fault ride-through strategies are provided, and a receiving-end power restoration speed is adjusted in conjunction with a sending-end alternating-current energy-consuming disconnection speed, to solve problems, such as system power imbalance, poor coordination and poor recovery characteristics after fault clearance that are prone to arise during the receiving-end alternating-current fault ride-through procedure of the multi-terminal transmission system for large-scale islanded renewable energy over an ultra-long distance, and to further avoid overvoltage blocking of converter stations and overvoltage-induced damage accidents of devices, such that the multi-terminal direct-current transmission system can ride through a severe fault at the alternating-current side of the receiving-end converter station safely and reliably. In addition, referring to a problem of discontinuous energy-consuming capacity due to grouping configuration of alternating-current energy-consuming resistors, a flexibly-switching strategy is provided. Power surplus is determined based on alternating-current voltage drop during a fault condition, an inputted number in the energy-consuming apparatuses is calculated, and flexibly-switching is performed repeatedly between energy-consuming sub-modules based on actual power consumption, to address a problem of mismatch between energy-consuming power and system surplus power caused by a discontinuous alternating-current energy-consuming capacity.

In an embodiment, taking an receiving-end converter station as an execution subject, the method for controlling alternating-current fault ride-through of a receiving-end according to the embodiment of the present disclosure is briefly described below in conjunction with the above embodiment, and detail descriptions of each step may be referred to the related description of the above embodiment.

The method for controlling alternating-current fault ride-through of a receiving-end according to the embodiment of the present disclosure is applied to a receiving-end converter station of a multi-terminal transmission system for a renewable energy islanded grid. The multi-terminal transmission system further includes an alternating-current energy-consuming apparatus and at least one sending-end converter station connected to the alternating-current energy-consuming apparatus, and each sending-end converter station of the at least one sending-end converter station is connected to at least two receiving-end converter stations. With the alternating-current energy-consuming apparatus, a general procedure of the method may be as follows. Firstly, in response to detecting that an alternating-current fault occurs, an alternating-current voltage fault signal is generated, and power surplus evaluation is performed, to obtain a surplus power value. The alternating-current voltage fault signal and the surplus power value are then transmitted to the alternating-current energy-consuming apparatus, where the alternating-current energy-consuming apparatus is inputted based on the alternating-current voltage fault signal and the surplus power value for absorbing islanded-voltage surplus power. In addition, in response to a constant power control way being adopted (that is, the receiving-end converter station where the fault occurs is a receiving-end constant-power station), a power reference value is to be adjusted based on the surplus power value.

Further, the performing power surplus evaluation, to obtain a surplus power value may be performed based on: $f = \left(1-\frac{{V}_{m_af}}{{V}_{m_pre}}\right) ⋅ {P}_{pre} ,$ where f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

Further, in response to detecting that alternating-current voltage is restored to a preset alternating-current voltage threshold, it is indicated that the fault is recovered, a fault recovery signal may be generated, and the fault recovery signal may be sent to the alternating-current energy-consuming apparatus, where the alternating-current energy-consuming apparatus systematically controls disconnection of inputted alternating-current energy-consuming at a disconnection rate. In response to detecting that the alternating-current energy-consuming apparatus systematically controls the disconnection of the inputted alternating-current energy-consuming at the disconnection rate and the constant power control way is adopted, the power reference value may be increased to power before the fault occurs at an increasing rate.

Further, the receiving-end converter station after the fault recovers may increase the power reference value to the power before the fault occurs at the increasing rate based on a delay operation, to achieve synchronization with the disconnection of the alternating-current energy-consuming apparatus. In an embodiment, in response to detecting that the alternating-current energy-consuming apparatus systematically controls the disconnection of the inputted alternating-current energy-consuming at the disconnection rate and the constant power control way is adopted, a power increase operation may be performed after a preset communication delay, to synchronize with an energy-consuming disconnection operation of the alternating-current energy-consuming apparatus.

Taking a receiving-end converter station as a research object, a method for controlling alternating-current fault ride-through of a receiving-end is provided according to the embodiment of the present disclosure, enabling those skilled in the art to more intuitively understand the related processing flow of the receiving-end converter station from fault occurrence to fault recovery.

In an embodiment, taking an alternating-current energy-consuming apparatus as an execution subject, the method for controlling alternating-current fault ride-through of a receiving-end according to the embodiment of the present disclosure is briefly described below in conjunction with the above embodiment, and detail descriptions of each step may be referred to the related description of the above embodiment.

The method for controlling alternating-current fault ride-through of a receiving-end according to the embodiment of the present disclosure is applied to an alternating-current energy-consuming apparatus of a multi-terminal transmission system for a renewable energy islanded grid. The multi-terminal transmission system further includes at least one sending-end converter station connected to the alternating-current energy-consuming apparatus, and each sending-end converter station of the at least one sending-end converter station is connected to at least two receiving-end converter stations. In conjunction with the receiving-end converter station, a general procedure of the method may be as follows. Firstly, an alternating-current voltage fault signal and a surplus power value that are transmitted from a receiving-end converter station where an alternating-current fault occurs are received. Input is then controlled based on the alternating-current voltage fault signal and the surplus power value for absorbing islanded-grid surplus power.

Further, based on the above description, the alternating-current energy-consuming apparatus may include multiple alternating-current energy-consuming sub-modules, and each alternating-current energy-consuming sub-module of the multiple alternating-current energy-consuming sub-modules respectively corresponds to an alternating-current energy-consuming capacity. The controlling, based on the alternating-current voltage fault signal and the surplus power value, input for absorbing islanded-grid surplus power, may include the following steps.

Firstly, a number of inputted alternating-current energy-consuming sub-modules is calculated by using the alternating-current energy-consuming capacity and the surplus power value based on the alternating-current voltage fault signal, and the calculated number of alternating-current energy-consuming sub-modules are inputted by rounding up the calculated number of inputted sub-modules to absorb the islanded-grid surplus power. In an embodiment, $\begin{matrix}{N}_{inputted sub - modules in the alternating - current energy - consuming apparatus} = \\ \prod \frac{f}{{P}_{capacity of each alternating - current energy - consuming apparatus}} ,\end{matrix}$ where N_{inputted sub-modules in the alternating-current energy-consuming apparatus} represents a number of inputted alternating-current energy-consuming sub-modules required in the alternating-current energy-consuming apparatus, Π represents rounding up, and P_{capacity of each alternating-current energy-consuming apparatus} represents an alternating-current energy-consuming capacity respectively corresponding to each alternating-current energy-consuming sub-module.

Actual total energy-consuming power during absorption of the surplus power is acquired, and in response to the actual total energy-consuming power being greater than the surplus power, an alternating-current energy-consuming sub-module is selected from the multiple alternating-current energy-consuming sub-modules as a flexibly-switching energy-consuming sub-module. The flexibly-switching energy-consuming sub-module is configured for controlling the actual total energy-consuming power and actual fault surplus power to be maintained within a difference range of ±10%.

Further, the controlling the actual total energy-consuming power and actual fault surplus power to be maintained within a difference range of ±10%, may include the following steps.

During the absorption of the surplus power, the flexibly-switching energy-consuming sub-module is controlled to be disconnected in response to the actual total energy-consuming power being greater than the surplus power, and the actual total energy-consuming power reaching 110% of the surplus power.

The flexibly-switching energy-consuming sub-module is controlled to be inputted again in response to the actual total energy-consuming power being less than the surplus power, and the actual total energy-consuming power being decreased to 90% of the surplus power.

Further, after the receiving-end converter station where an alternating-current fault occurs recovers from the alternating-current fault, the alternating-current energy-consuming apparatus may control, in response to receiving a fault recovery signal transmitted from the receiving-end converter station where an alternating-current fault occurs recovers from the fault, the inputted alternating-current energy-consuming sub-modules to be systematically disconnected at a disconnection rate.

Further, based on the above description, the receiving-end converter station after the fault recovers may increase the power reference value to the power before the fault occurs at an increasing rate based on a delay operation, to achieve synchronization with the disconnection of the alternating-current energy-consuming apparatus. Accordingly, during the disconnection, the alternating-current energy-consuming apparatus may acquire an increasing rate for a power increase operation performed by the receiving-end converter station after the fault recovers, and calculate a disconnection time interval based on: $T = \frac{f}{L ⋅ {N}_{inputted sub - modules in the alternating - current energy - consuming apparatus}} ,$ where T represents a time interval during which an alternating-current energy-consuming sub-module is disconnected by the alternating-current energy-consuming apparatus, and L represents the increasing rate for the power increase operation performed by the receiving-end converter station after the fault recovers.

The alternating-current energy-consuming apparatus may control the disconnection rate to be the same as the increasing rate based on the disconnection time interval, or control an error between the disconnection rate and the increasing rate to be within a preset error rate range.

To adapt to the processing flow of the receiving-end converter station, taking the alternating-current energy-consuming apparatus as a research object, a method for controlling alternating-current fault ride-through of a receiving-end is provided in an embodiment of the present disclosure. Those skilled in the art can further understand the related process from fault occurrence to fault recovery in conjunction with the alternating-current energy-consuming apparatus on the basis of clearly understanding the processing flow of the receiving-end converter station, and have a deeper understanding of the overall solution for controlling alternating-current fault ride-through of a receiving-end.

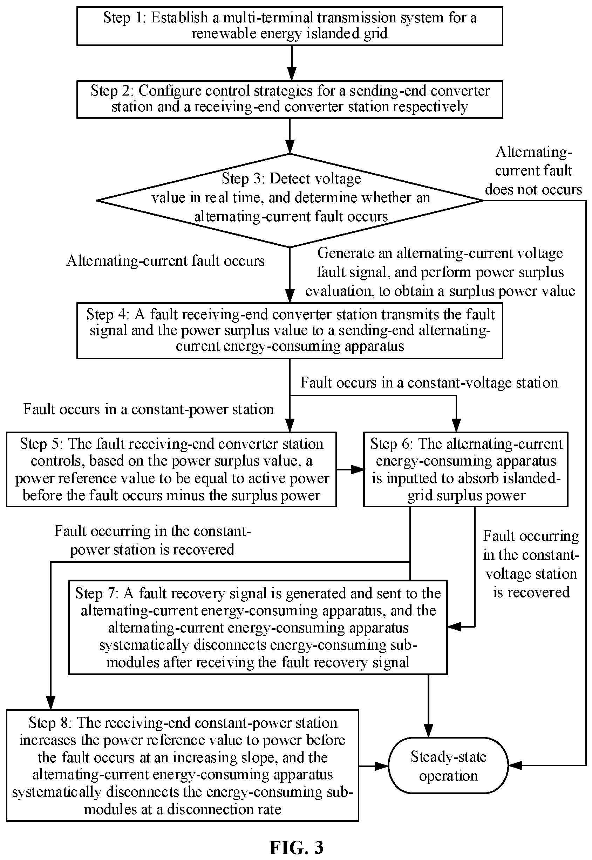

For better description, reference is made to FIG. 3, which is an overall flowchart of a method for controlling alternating-current fault ride-through of a receiving-end according to an embodiment of the present disclosure. It should be noted that only an overall general procedure of the method for controlling alternating-current fault ride-through of a receiving-end is schematically described according to the embodiment of the present disclosure, and each execution step may be referred to the related description in the above embodiments, which is not repeated herein. It should be understood that the present disclosure is not limited thereto.

In step 1, a multi-terminal transmission system for a renewable energy islanded grid is established, and the specific architecture diagram of the multi-terminal transmission system may be referred to FIG. 1a.

In step 2, control strategies are configured respectively for a sending-end converter station and a receiving-end converter station. The sending-end converter station adopts a dual closed-loop control way for constant alternating-current voltage-frequency, one receiving-end converter station adopts a direct-current constant-voltage control way, and the other receiving-end converter stations adopt a constant-power control way. In addition, an alternating-current fault power control way is configured for a power-controlled receiving-end converter station, power parameters during a fault condition and a power restoration curve during fault recovery are set, and a smooth switching slope is set. The specific control block diagram of the power-controlled receiving-end converter station may be referred to FIG. 1b.

In step 3, alternating-current voltage of the receiving-end converter station is detected in real time, and whether an alternating-current fault occurs is determined based on an effective value of the alternating-current voltage. If an alternating-current fault occurs, the receiving-end converter station where the fault occurs is determined as a fault receiving-end converter station, alternating-current voltage fault signal U_{low} is generated, and power surplus evaluation is performed, to obtain power surplus value f.

In step 4, the fault receiving-end converter station transmits fault signal U_{low} and power surplus value f to the sending-end alternating-current energy-consuming apparatus. If the fault receiving-end converter station is a receiving-end constant-power station, step 5 is to be performed, and if the fault receiving-end converter station is a receiving-end constant-voltage station, step 6 is to be performed.

In step 5, based on power surplus value f, the fault receiving-end converter station controls a power reference value to be equal to active power before the fault occurs minus surplus power f, and step 6 is to be performed.

In step 6, after receiving fault signal U_{low} and power surplus value f transmitted from the fault receiving-end converter station, the alternating-current energy-consuming apparatus is inputted to absorb islanded-grid surplus power. When absorbing the surplus power, a number of inputted sub-modules in the alternating-current energy-consuming apparatus is rounded up. When actual total energy-consuming power of the alternating-current energy-consuming apparatus is greater than the surplus power, an alternating-current energy-consuming sub-module with a flexibly-switching function is provided, to avoid unnecessary power loss of the system. The alternating-current energy-consuming sub-modules control the actual total energy-consuming power of the alternating-current energy-consuming apparatus and actual fault surplus power to be maintained within a difference range of ±10% through a flexibly-switching way.

In step 7, when the fault receiving-end converter station detects that the alternating-current voltage is restored to a preset value, if the fault receiving-end converter station is a receiving-end constant-voltage station, a fault recovery signal is generated and sent to the alternating-current energy-consuming apparatus. After receiving the fault recovery signal, the alternating-current energy-consuming apparatus systematically disconnects inputted energy-consuming sub-modules at a disconnection rate. If the fault receiving-end converter station is a receiving-end constant-power station, step 8 is to be performed.

In step 8, the receiving-end constant-power station increases the power reference value to the power before the fault occurs at an increasing slope, and the sending-end alternating-current energy-consuming apparatus systematically disconnects the energy-consuming sub-modules at a disconnection rate. The disconnection rate of the alternating-current energy-consuming apparatus is basically the same as the power increasing rate of the receiving-end constant-power station. After the alternating-current fault at the receiving end is recovered, the fault receiving-end converter station needs to consider alternating-current energy-consuming communication delay t, and start to increase power/disconnect energy-consuming sub-modules synchronously with the alternating-current energy-consuming apparatus that receives the fault restoration signal after delay t.

In an embodiment, an apparatus for controlling alternating-current fault ride-through of a receiving-end is provided according to an embodiment of the present disclosure, which is for use in a receiving-end converter station of a multi-terminal transmission system for a renewable energy islanded grid. The multi-terminal transmission system further includes an alternating-current energy-consuming apparatus and at least one sending-end converter station connected to the alternating-current energy-consuming apparatus, and each sending-end converter station of the at least one sending-end converter station is connected to at least two receiving-end converter stations. The apparatus includes:
a first power surplus evaluating module, configured to generate, in response to detecting that an alternating-current fault occurs, an alternating-current voltage fault signal, and perform power surplus evaluation, to obtain a surplus power value;
a first surplus power value transmitting module, configured to transmit the alternating-current voltage fault signal and the surplus power value to the alternating-current energy-consuming apparatus, where the alternating-current energy-consuming apparatus is inputted based on the alternating-current voltage fault signal and the surplus power value for absorbing islanded-voltage surplus power; and
a power reference value adjusting module, configured to adjust, in response to a constant power control way being adopted, a power reference value based on the surplus power value.

In an embodiment, the first power surplus evaluating module is specifically configured to: calculate the surplus power value based on: $f = \left(1-\frac{{V}_{m_af}}{{V}_{m_pre}}\right) ⋅ {P}_{pre} ,$ where f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

In an embodiment, the apparatus further includes:
a fault recovery signal generating and sending module, configured to generate, in response to detecting that alternating-current voltage is restored to a preset alternating-current voltage threshold, a fault recovery signal, and send the fault recovery signal to the alternating-current energy-consuming apparatus, where the alternating-current energy-consuming apparatus systematically controls disconnection of inputted alternating-current energy-consuming at a disconnection rate; and
a power synchronization increasing module, configured to increase, in response to detecting that the alternating-current energy-consuming apparatus systematically controls the disconnection of the inputted alternating-current energy-consuming at the disconnection rate and the constant power control way is adopted, the power reference value to power before the fault occurs at an increasing rate.

In an embodiment, the power synchronization increase module is specifically configured to:
perform, in response to detecting that the alternating-current energy-consuming apparatus systematically controls the disconnection of the inputted alternating-current energy-consuming at the disconnection rate and the constant power control way is adopted, a power increase operation after a preset communication delay, to synchronize with an energy-consuming disconnection operation of the alternating-current energy-consuming apparatus.

In an embodiment, an apparatus for controlling alternating-current fault ride-through of a receiving-end is further provided according to an embodiment of the present disclosure, which is for use in an alternating-current energy-consuming apparatus of a multi-terminal transmission system for a renewable energy islanded grid. The multi-terminal transmission system further includes at least one sending-end converter station connected to the alternating-current energy-consuming apparatus, and each sending-end converter station of the at least one sending-end converter station is connected to at least two receiving-end converter stations. The apparatus includes:
a surplus power value receiving module, configured to receive an alternating-current voltage fault signal and a surplus power value that are transmitted from a receiving-end converter station where an alternating-current fault occurs; and
a surplus power inputting module, configured to control, based on the alternating-current voltage fault signal and the surplus power value, input for absorbing islanded-grid surplus power.

In an embodiment, the alternating-current energy-consuming apparatus includes multiple alternating-current energy-consuming sub-modules, each alternating-current energy-consuming sub-module of the multiple alternating-current energy-consuming sub-modules respectively corresponds to an alternating-current energy-consuming capacity, and the surplus power absorption module includes:
an alternating-current energy-consuming sub-module number calculation module, configured to calculate, based on the alternating-current voltage fault signal, a number of inputted alternating-current energy-consuming sub-modules by using the alternating-current energy-consuming capacity and the surplus power value, and input, by rounding up the calculated number of inputted sub-modules, the calculated number of alternating-current energy-consuming sub-modules to absorb the islanded-grid surplus power; and
a flexibly-switching setting sub-module, configured to acquire actual total energy-consuming power during absorption of the surplus power, and select, in response to the actual total energy-consuming power being greater than the surplus power, an alternating-current energy-consuming sub-modules from the multiple alternating-current energy-consuming sub-modules as a flexibly-switching energy-consuming sub-module, where the flexibly-switching energy-consuming sub-module is configured for controlling the actual total energy-consuming power and actual fault surplus power to be maintained within a difference range of ±10%.

In an embodiment, the flexibly-switching setting sub-module includes:
a flexibly-switching disconnecting sub-module, configured to, during the absorption of the surplus power, control, in response to the actual total energy-consuming power being greater than the surplus power, and the actual total energy-consuming power reaching 110% of the surplus power, the flexibly-switching energy-consuming sub-module to be disconnected; and
a flexibly-switching inputting sub-module, configured to control, in response to the actual total energy-consuming power being less than the surplus power, and the actual total energy-consuming power being decreased to 90% of the surplus power, the flexibly-switching energy-consuming sub-module to be inputted again.

In an embodiment, the apparatus further includes:
An energy-consuming disconnecting sub-module, configured to control, in response to receiving a fault recovery signal transmitted from the receiving-end converter station where an alternating-current fault occurs recovers from the fault, the inputted alternating-current energy-consuming sub-modules to be systematically disconnected at a disconnection rate.

In an embodiment, the apparatus further includes:
a disconnection time interval calculating sub-module, configured to, during disconnection, acquire an increasing rate for a power increase operation performed by the receiving-end converter station after the fault recovers, and calculate a disconnection time interval based on: $T = \frac{f}{L ⋅ {N}_{inputted sub - modules in the alternating - current energy - consuming apparatus}} ,$
where T represents a time interval during which an alternating-current energy-consuming sub-module is disconnected by the alternating-current energy-consuming apparatus, f represents the surplus power value, L represents the increasing rate for the power increase operation performed by the receiving-end converter station after the fault recovers, and N_{inputted sub-modules in the alternating-current energy-consuming apparatus} represents a number of inputted alternating-current energy-consuming sub-modules required in the alternating-current energy-consuming apparatus; and
a disconnection rate and increasing rate synchronizing sub-module, configured to control the disconnection rate to be the same as the increasing rate based on the disconnection time interval, or control an error between the disconnection rate and the increasing rate to be within a preset error rate range.

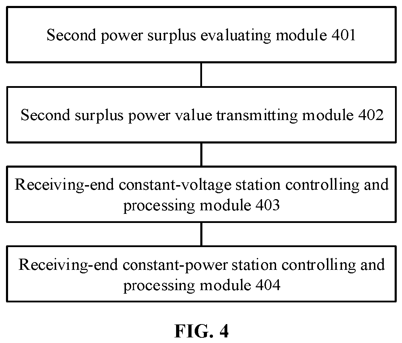

Reference is made to FIG. 4, which is a structural block diagram of an apparatus for controlling alternating-current fault ride-through of a receiving-end according to an embodiment of the present disclosure. The apparatus is for use in a multi-terminal transmission system for a renewable energy islanded grid. The multi-terminal transmission system at least includes an alternating-current energy-consuming apparatus and at least one sending-end converter station connected to the alternating-current energy-consuming apparatus, and each sending-end converter station of the at least one sending-end converter station is connected to at least two receiving-end converter stations. The apparatus specifically includes:
a second power surplus evaluating module 401, configured to determine a receiving-end converter station where an alternating-current fault is detected as a fault receiving-end converter station, generate an alternating-current voltage fault signal through the fault receiving-end converter station, and perform power surplus evaluation, to obtain a surplus power value;
a second surplus power value transmitting module 402, configured to transmit, through the fault receiving-end converter station, the alternating-current voltage fault signal and the surplus power value to the alternating-current energy-consuming apparatus;
a receiving-end constant-voltage station controlling and processing module 403, configured to absorb, in response to the fault receiving-end converter station being a receiving-end constant-voltage station, islanded-grid surplus power by inputting the alternating-current energy-consuming apparatus based on the alternating-current voltage fault signal and the surplus power value; and
a receiving-end constant-power station controlling and processing module 404, configured to adjust, in response to the fault receiving-end converter station being a receiving-end constant-power station, a power reference value of the fault receiving-end converter station based on the surplus power value through the fault receiving-end converter station, and absorb the islanded-grid surplus power by inputting the alternating-current energy-consuming apparatus.

In an embodiment, the power surplus evaluating module 401 is specifically configured to:
calculate a surplus power value corresponding to the fault receiving-end converter station based on: $f = \left(1-\frac{{V}_{m_af}}{{V}_{m_pre}}\right) ⋅ {P}_{pre} ,$
where f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

In an embodiment, the alternating-current energy-consuming apparatus includes multiple alternating-current energy-consuming sub-modules, each alternating-current energy-consuming sub-module of the multiple alternating-current energy-consuming sub-modules respectively corresponds to an alternating-current energy-consuming capacity, and the receiving-end constant-voltage station controlling and processing module 403 includes:
an inputted sub-modules number rounding up module, configured to calculate, based on the alternating-current voltage fault signal, a number of inputted alternating-current energy-consuming sub-modules by using the alternating-current energy-consuming capacity and the surplus power value, and input, by rounding up the calculated number of inputted sub-modules, the calculated number of alternating-current energy-consuming sub-modules to absorb the islanded-grid surplus power; and
a flexibly-switching setting module, configured to acquire actual total energy-consuming power of the alternating-current energy-consuming apparatus during absorption of the surplus power, and select, in response to the actual total energy-consuming power being greater than the surplus power, an alternating-current energy-consuming sub-modules from the multiple alternating-current energy-consuming sub-modules as a flexibly-switching energy-consuming sub-module, where the flexibly-switching energy-consuming sub-module is configured for controlling the actual total energy-consuming power and actual fault surplus power to be maintained within a difference range of ±10%.

In an embodiment, the flexibly-switching setting module includes:
a flexibly-switching disconnecting module, configured to, during the absorption of the surplus power, control, in response to the actual total energy-consuming power being greater than the surplus power, and the actual total energy-consuming power reaching 110% of the surplus power, the flexibly-switching energy-consuming sub-module to be disconnected through the alternating-current energy-consuming apparatus; and
a flexibly-switching inputting module, configured to control, in response to the actual total energy-consuming power being less than the surplus power, and the actual total energy-consuming power being decreased to 90% of the surplus power, the flexibly-switching energy-consuming sub-module to be inputted again through the alternating-current energy-consuming apparatus.

In an embodiment, the apparatus further includes:
a fault recovery signal generating module, configured to generate, in response to detecting that alternating-current voltage of the fault receiving-end converter station is restored to a preset alternating-current voltage threshold, a fault recovery signal through the fault receiving-end converter station, and send the fault recovery signal to the alternating-current energy-consuming apparatus;
an energy-consuming disconnecting module, configured to control, based on the fault recovery signal, inputted alternating-current energy-consuming sub-modules to be systematically disconnected at a disconnection rate through the alternating-current energy-consuming apparatus; and
a power increasing module, configured to increase, in response to the fault receiving-end converter station being a receiving-end constant-power station, the power reference value of the fault receiving-end converter station to power before the fault occurs at an increasing rate.

In an embodiment, the apparatus further includes:
a disconnection time interval calculating module, during disconnection, configured to calculate, a disconnection time interval of the alternating-current energy-consuming apparatus based on: $T = \frac{f}{L ⋅ {N}_{inputted sub - modules in the alternating - current energy - consuming apparatus}} ,$
where T represents a time interval during which an alternating-current energy-consuming sub-module is disconnected by the alternating-current energy-consuming apparatus, L represents an increasing rate for a power increase operation performed by the receiving-end converter station after the fault recovers, and N_{inputted sub-modules in the alternating-current energy-consuming apparatus} represents a number of inputted alternating-current energy-consuming sub-modules required in the alternating-current energy-consuming apparatus; and
a disconnection rate and increasing rate synchronizing module, configured to control, through the alternating-current energy-consuming apparatus, the disconnection rate to be the same as the increasing rate based on the disconnection time interval, or control, through the alternating-current energy-consuming apparatus, an error between the disconnection rate and the increasing rate to be within a preset error rate range; and
a power increase delay performing module, configured to control, in response to the fault receiving-end converter station being a receiving-end constant-power station, the fault receiving-end converter station to perform a power increase operation after a preset communication delay, to synchronize with an energy-consuming disconnection operation of the alternating-current energy-consuming apparatus.

In an embodiment, all sending-end converter stations adopt a dual closed-loop control way for constant alternating-current voltage-frequency, and for at least two receiving-end converter stations corresponding to each sending-end converter station, one receiving-end converter station of the at least two receiving-end converter stations adopts a constant direct-current voltage control way, and the other receiving-end converter station of the at least two receiving-end converter stations adopts a constant power control way.

Since the apparatus disclosed in the embodiments is basically similar to the method therein, the description of the apparatus is relatively simple. For relevant matters, the description of the method embodiments described above may be referred to.

According to an embodiment of the present disclosure, an electronic device is further provided, where the electronic device includes a processor and a memory, where
the memory is configured to store a program code, and transmit the program code to the processor; and
the processor is configured to perform the method for controlling alternating-current fault ride-through of a receiving-end according to any one of the embodiments of the present disclosure according to an instruction in the program code.

According to an embodiment of the present disclosure, a computer-readable storage medium is further provided, where the computer-readable storage medium is configured to store a program code, and the program is used for performing the method for controlling alternating-current fault ride-through of a receiving-end according to any one of the embodiments of the present disclosure.

For the sake of convenience and brevity of description, a detailed operating process of the system, the apparatus, and the units may refer to a corresponding process in the method embodiments and is not repeated herein.

The system, the apparatus, and the method according to embodiments of the present disclosure may be implemented in other manners. For example, the apparatus embodiments described above are only illustrative. For example, the delimitation of the units is on a basis logical function, and they may be delimited otherwise in practice. For example, multiple units or components may be combined or may be integrated into another system, or some features may be omitted or may be not implemented. In addition, the mutual coupling or direct coupling or communication connection shown or discussed above may be indirect coupling or communication connection via some interfaces, apparatuses or units, and may be electrical, mechanical or in other forms.

The units described as separate components may be or may not be separated physically, and components displayed as units may be or may not be physical units. That is, the components may be located at a same position or may be distributed among multiple network units. Some or all of the units may be selected according to actual requirements to achieve an objective of the present embodiments.

In addition, all function units according to the embodiment of the present disclosure may be integrated into one processing unit, or may be a physically separate unit, or two or more units are integrated into one unit. The above integrated units may be implemented as hardware or software functional units.

In a case that the integrated unit is implemented in the form of a software functional unit and is sold or used as an independent product, the integrated unit may be stored in a computer-readable storage medium. Based on such understanding, an essence or a part contributing to the related art of the technical solutions, or all or a part of the technical solutions of the present disclosure, may be embodied in a form of a software product. The software product may be stored in a storage medium and include instructions for enabling a computer device (which may be a personal computer, a server, a network device and so on) to perform all or a part of the steps of the methods according to the embodiments of the present disclosure. The storage medium includes a U disk, a removable hard disk, a read-only memory (ROM), a random-access memory (RAM), a magnetic disk, an optical disk, or another media that can store program codes.

In summary, the above embodiments are only for illustrating the technical solutions of the present disclosure, and are not intended to limit the present disclosure. Although the present disclosure is illustrated in detail with reference to the embodiments described above, it should be understood by those skilled in the art that modifications can be made to the technical solutions recited in the embodiments described above, or equivalent substitutions can be made onto a part of technical features of the technical solutions. Such modifications or equivalent substitutions do not make the corresponding technical solutions deviate from the spirit and scope of the technical solutions of the embodiments of the present disclosure.

## Claims

1. A method for controlling alternating-current fault ride-through of a receiving-end, applied to a receiving-end converter station of a multi-terminal transmission system for a renewable energy islanded grid, wherein the multi-terminal transmission system further comprises an alternating-current energy-consuming apparatus and at least one sending-end converter station connected to the alternating-current energy-consuming apparatus, each sending-end converter station of the at least one sending-end converter station is connected to at least two receiving-end converter stations, and the method comprises:
generating, in response to detecting that an alternating-current fault occurs, an alternating-current voltage fault signal, and performing power surplus evaluation, to obtain a surplus power value;
transmitting the alternating-current voltage fault signal and the surplus power value to the alternating-current energy-consuming apparatus, wherein the alternating-current energy-consuming apparatus is inputted to absorb islanded-voltage surplus power based on the alternating-current voltage fault signal and the surplus power value; and
adjusting, in response to a constant power control way being adopted, a power reference value based on the surplus power value.

2. The method for controlling alternating-current fault ride-through of a receiving-end according to claim 1, wherein the performing power surplus evaluation, to obtain a surplus power value, comprises:
calculating the surplus power value based on: $f = \left(1-\frac{{V}_{m_af}}{{V}_{m_pre}}\right) ⋅ {P}_{pre} ,$
wherein f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

3. The method for controlling alternating-current fault ride-through of a receiving-end according to claim 1, further comprising:
generating, in response to detecting that alternating-current voltage is restored to a preset alternating-current voltage threshold, a fault recovery signal, and sending the fault recovery signal to the alternating-current energy-consuming apparatus, wherein the alternating-current energy-consuming apparatus systematically controls disconnection of inputted alternating-current energy-consuming at a disconnection rate; and
increasing, in response to detecting that the alternating-current energy-consuming apparatus systematically controls the disconnection of the inputted alternating-current energy-consuming at the disconnection rate and the constant power control way is adopted, the power reference value to power before the fault occurs at an increasing rate.

4. The method for controlling alternating-current fault ride-through of a receiving-end according to claim 3, wherein the increasing, in response to detecting that the alternating-current energy-consuming apparatus systematically controls the disconnection of the inputted alternating-current energy-consuming at the disconnection rate and the constant power control way is adopted, the power reference value to power before the fault occurs at an increasing rate, comprises:
performing, in response to detecting that the alternating-current energy-consuming apparatus systematically controls the disconnection of the inputted alternating-current energy-consuming at the disconnection rate and the constant power control way is adopted, a power increase operation after a preset communication delay, to synchronize with an energy-consuming disconnection operation of the alternating-current energy-consuming apparatus.

5. A method for controlling alternating-current fault ride-through of a receiving-end, applied to an alternating-current energy-consuming apparatus of a multi-terminal transmission system for a renewable energy islanded grid, wherein the multi-terminal transmission system further comprises at least one sending-end converter station connected to the alternating-current energy-consuming apparatus, each sending-end converter station of the at least one sending-end converter station is connected to at least two receiving-end converter stations, and the method comprises:
receiving an alternating-current voltage fault signal and a surplus power value that are transmitted from a receiving-end converter station where an alternating-current fault occurs; and
controlling, based on the alternating-current voltage fault signal and the surplus power value, input for absorbing islanded-grid surplus power.

6. The method for controlling alternating-current fault ride-through of a receiving-end according to claim 5, wherein the alternating-current energy-consuming apparatus comprises multiple alternating-current energy-consuming sub-modules, each alternating-current energy-consuming sub-module of the multiple alternating-current energy-consuming sub-modules respectively corresponds to an alternating-current energy-consuming capacity, and the controlling, based on the alternating-current voltage fault signal and the surplus power value, input for absorbing islanded-grid surplus power, comprises:
calculating, based on the alternating-current voltage fault signal, a number of inputted alternating-current energy-consuming sub-modules by using the alternating-current energy-consuming capacity and the surplus power value, and inputting, by rounding up the calculated number of inputted sub-modules, the calculated number of alternating-current energy-consuming sub-modules to absorb the islanded-grid surplus power; and
acquiring actual total energy-consuming power during absorption of the surplus power, and selecting, in response to the actual total energy-consuming power being greater than the surplus power, an alternating-current energy-consuming sub-modules from the multiple alternating-current energy-consuming sub-modules as a flexibly-switching energy-consuming sub-module, wherein the flexibly-switching energy-consuming sub-module is configured for controlling the actual total energy-consuming power and actual fault surplus power to be maintained within a difference range of ±10%.

7. The method for controlling alternating-current fault ride-through of a receiving-end according to claim 6, wherein the controlling the actual total energy-consuming power and actual fault surplus power to be maintained within a difference range of ±10%, comprises:
during the absorption of the surplus power, controlling, in response to the actual total energy-consuming power being greater than the surplus power, and the actual total energy-consuming power reaching 110% of the surplus power, the flexibly-switching energy-consuming sub-module to be disconnected; and
controlling, in response to the actual total energy-consuming power being less than the surplus power, and the actual total energy-consuming power being decreased to 90% of the surplus power, the flexibly-switching energy-consuming sub-module to be inputted again.

8. The method for controlling alternating-current fault ride-through of a receiving-end according to claim 6, further comprising:
controlling, in response to receiving a fault recovery signal transmitted from the receiving-end converter station where an alternating-current fault occurs recovers from the fault, the inputted alternating-current energy-consuming sub-modules to be systematically disconnected at a disconnection rate.

9. The method for controlling alternating-current fault ride-through of a receiving-end according to claim 8, further comprising:
during disconnection, acquiring an increasing rate for a power increase operation performed by the receiving-end converter station after the fault recovers, and calculating a disconnection time interval based on: $T = \frac{f}{L ⋅ {N}_{inputted sub - modules in the alternating - current energy - consuming apparatus}} ,$
wherein T represents a time interval during which an alternating-current energy-consuming sub-module is disconnected by the alternating-current energy-consuming apparatus, f represents the surplus power value, L represents the increasing rate for the power increase operation performed by the receiving-end converter station after the fault recovers, and N_{inputted sub-modules in the alternating-current energy-consuming apparatus} represents a number of inputted alternating-current energy-consuming sub-modules required in the alternating-current energy-consuming apparatus; and
controlling the disconnection rate to be the same as the increasing rate based on the disconnection time interval, or controlling an error between the disconnection rate and the increasing rate to be within a preset error rate range.

10. A method for controlling alternating-current fault ride-through of a receiving-end, applied to a multi-terminal transmission system for a renewable energy islanded grid, wherein the multi-terminal transmission system at least comprises an alternating-current energy-consuming apparatus and at least one sending-end converter station connected to the alternating-current energy-consuming apparatus, each sending-end converter station of the at least one sending-end converter station is connected to at least two receiving-end converter stations, and the method comprises:
determining a receiving-end converter station where an alternating-current fault is detected as a fault receiving-end converter station, generating an alternating-current voltage fault signal through the fault receiving-end converter station, and performing power surplus evaluation, to obtain a surplus power value;
transmitting, through the fault receiving-end converter station, the alternating-current voltage fault signal and the surplus power value to the alternating-current energy-consuming apparatus;
absorbing, in response to the fault receiving-end converter station being a receiving-end constant-voltage station, islanded-grid surplus power by inputting the alternating-current energy-consuming apparatus based on the alternating-current voltage fault signal and the surplus power value; and
adjusting, in response to the fault receiving-end converter station being a receiving-end constant-power station, a power reference value of the fault receiving-end converter station based on the surplus power value through the fault receiving-end converter station, and absorbing the islanded-grid surplus power by inputting the alternating-current energy-consuming apparatus.

11. The method for controlling alternating-current fault ride-through of a receiving-end according to claim 10, wherein the performing power surplus evaluation, to obtain a surplus power value, comprises:
calculating a surplus power value corresponding to the fault receiving-end converter station based on: $f = \left(1-\frac{{V}_{m_af}}{{V}_{m_pre}}\right) ⋅ {P}_{pre} ,$
wherein f represents the surplus power value, V_{m_af} represents an effective value of voltage at an alternating-current side after the fault occurs, V_{m_pre} represents an effective value of the voltage at the alternating-current side before the fault occurs, and Pₚᵣₑ represents active power before the fault occurs.

12. The method for controlling alternating-current fault ride-through of a receiving-end according to claim 11, wherein the alternating-current energy-consuming apparatus comprises multiple alternating-current energy-consuming sub-modules, each alternating-current energy-consuming sub-module of the multiple alternating-current energy-consuming sub-modules respectively corresponds to an alternating-current energy-consuming capacity, and the absorbing islanded-grid surplus power by inputting the alternating-current energy-consuming apparatus based on the alternating-current voltage fault signal and the surplus power value, comprises:
calculating, based on the alternating-current voltage fault signal, a number of inputted alternating-current energy-consuming sub-modules by using the alternating-current energy-consuming capacity and the surplus power value, and inputting, by rounding up the calculated number of inputted sub-modules, the calculated number of alternating-current energy-consuming sub-modules to absorb the islanded-grid surplus power; and
acquiring actual total energy-consuming power of the alternating-current energy-consuming apparatus during absorption of the surplus power, and selecting, in response to the actual total energy-consuming power being greater than the surplus power, an alternating-current energy-consuming sub-modules from the multiple alternating-current energy-consuming sub-modules as a flexibly-switching energy-consuming sub-module through the alternating-current energy-consuming apparatus, wherein the flexibly-switching energy-consuming sub-module is configured for controlling the actual total energy-consuming power and actual fault surplus power to be maintained within a difference range of ±10%.

13. The method for controlling alternating-current fault ride-through of a receiving-end according to claim 12, wherein the controlling the actual total energy-consuming power and actual fault surplus power to be maintained within a difference range of ±10%, comprises:
during the absorption of the surplus power, controlling, in response to the actual total energy-consuming power being greater than the surplus power, and the actual total energy-consuming power reaching 110% of the surplus power, the flexibly-switching energy-consuming sub-module to be disconnected through the alternating-current energy-consuming apparatus; and
controlling, in response to the actual total energy-consuming power being less than the surplus power, and the actual total energy-consuming power being decreased to 90% of the surplus power, the flexibly-switching energy-consuming sub-module to be inputted again through the alternating-current energy-consuming apparatus.

14. The method for controlling alternating-current fault ride-through of a receiving-end according to claim 12, further comprising:
generating, in response to detecting that alternating-current voltage of the fault receiving-end converter station is restored to a preset alternating-current voltage threshold, a fault recovery signal through the fault receiving-end converter station, and sending the fault recovery signal to the alternating-current energy-consuming apparatus;
controlling, based on the fault recovery signal, inputted alternating-current energy-consuming sub-modules to be systematically disconnected at a disconnection rate through the alternating-current energy-consuming apparatus; and
increasing, in response to the fault receiving-end converter station being a receiving-end constant-power station, the power reference value of the fault receiving-end converter station to power before the fault occurs at an increasing rate.

15. The method for controlling alternating-current fault ride-through of a receiving-end according to claim 14, further comprising:
during disconnection, calculating a disconnection time interval of the alternating-current energy-consuming apparatus based on: $T = \frac{f}{L ⋅ {N}_{inputted sub - modules in the alternating - current energy - consuming apparatus}} ,$
wherein T represents a time interval during which an alternating-current energy-consuming sub-module is disconnected by the alternating-current energy-consuming apparatus, L represents an increasing rate for a power increase operation performed by the receiving-end converter station after the fault recovers, and N_{inputted sub-modules in the alternating-current energy-consuming apparatus} represents a number of inputted alternating-current energy-consuming sub-modules required in the alternating-current energy-consuming apparatus; and
controlling, through the alternating-current energy-consuming apparatus, the disconnection rate to be the same as the increasing rate based on the disconnection time interval, or controlling, through the alternating-current energy-consuming apparatus, an error between the disconnection rate and the increasing rate to be within a preset error rate range; and
controlling, in response to the fault receiving-end converter station being a receiving-end constant-power station, the fault receiving-end converter station to perform a power increase operation after a preset communication delay, to synchronize with an energy-consuming disconnection operation of the alternating-current energy-consuming apparatus.

16. The method for controlling alternating-current fault ride-through of a receiving-end according to any one of claims 1 to 15, wherein all sending-end converter stations adopt a dual closed-loop control way for constant alternating-current voltage-frequency, and for at least two receiving-end converter stations corresponding to each sending-end converter station, one receiving-end converter station of the at least two receiving-end converter stations adopts a constant direct-current voltage control way, and the other receiving-end converter station of the at least two receiving-end converter stations adopts a constant power control way.

17. An apparatus for controlling alternating-current fault ride-through of a receiving-end, for use in a receiving-end converter station of a multi-terminal transmission system for a renewable energy islanded grid, wherein the multi-terminal transmission system further comprises an alternating-current energy-consuming apparatus and at least one sending-end converter station connected to the alternating-current energy-consuming apparatus, each sending-end converter station of the at least one sending-end converter station is connected to at least two receiving-end converter stations, and the apparatus comprises:
a first power surplus evaluating module, configured to generate, in response to detecting that an alternating-current fault occurs, an alternating-current voltage fault signal, and perform power surplus evaluation, to obtain a surplus power value;
a first surplus power value transmitting module, configured to transmit the alternating-current voltage fault signal and the surplus power value to the alternating-current energy-consuming apparatus, wherein the alternating-current energy-consuming apparatus is inputted to absorb islanded-voltage surplus power based on the alternating-current voltage fault signal and the surplus power value; and
a power reference value adjusting module, configured to adjust, in response to a constant power control way being adopted, a power reference value based on the surplus power value.

18. An apparatus for controlling alternating-current fault ride-through of a receiving-end, for use in an alternating-current energy-consuming apparatus of a multi-terminal transmission system for a renewable energy islanded grid, wherein the multi-terminal transmission system further comprises at least one sending-end converter station connected to the alternating-current energy-consuming apparatus, each sending-end converter station of the at least one sending-end converter station is connected to at least two receiving-end converter stations, and the apparatus comprises:
a surplus power value receiving module, configured to receive an alternating-current voltage fault signal and a surplus power value that are transmitted from a receiving-end converter station where an alternating-current fault occurs; and
a surplus power inputting module, configured to control, based on the alternating-current voltage fault signal and the surplus power value, input for absorbing islanded-grid surplus power.

19. An apparatus for controlling alternating-current fault ride-through of a receiving-end, for use in a multi-terminal transmission system for a renewable energy islanded grid, wherein the multi-terminal transmission system at least comprises an alternating-current energy-consuming apparatus and at least one sending-end converter station connected to the alternating-current energy-consuming apparatus, each sending-end converter station of the at least one sending-end converter station is connected to at least two receiving-end converter stations, and the apparatus comprises:
a second power surplus evaluating module, configured to determine a receiving-end converter station where an alternating-current fault is detected as a fault receiving-end converter station, generate an alternating-current voltage fault signal through the fault receiving-end converter station, and perform power surplus evaluation, to obtain a surplus power value;
a second surplus power value transmitting module, configured to transmit, through the fault receiving-end converter station, the alternating-current voltage fault signal and the surplus power value to the alternating-current energy-consuming apparatus;
a receiving-end constant-voltage station controlling and processing module, configured to absorb, in response to the fault receiving-end converter station being a receiving-end constant-voltage station, islanded-grid surplus power by inputting the alternating-current energy-consuming apparatus based on the alternating-current voltage fault signal and the surplus power value; and
a receiving-end constant-power station controlling and processing module, configured to adjust, in response to the fault receiving-end converter station being a receiving-end constant-power station, a power reference value of the fault receiving-end converter station based on the surplus power value through the fault receiving-end converter station, and absorb the islanded-grid surplus power by inputting the alternating-current energy-consuming apparatus.

20. An electronic device, comprising a processor and a memory, wherein
the memory is configured to store a program code, and transmit the program code to the processor; and
the processor is configured to perform the method for controlling alternating-current fault ride-through of a receiving-end according to any one of claims 1 to 16 according to an instruction in the program code.

21. A computer-readable storage medium, wherein the computer-readable storage medium is configured to store a program code, and the program is used for performing the method for controlling alternating-current fault ride-through of a receiving-end according to any one of claims 1 to 16.
